# EUROPEAN PATENT APPLICATION

(11) **EP 4 524 524 A1**
(43) Date of publication of application: **19.03.2025**
(21) Application number: 23196961.9
(22) Date of filing: 12.09.2023
(51) Int. Cl.: G01F 23/284, G01F 25/20, G01S 13/88

(54) **RADAR LEVEL GAUGE SYSTEM AND METHOD FOR DETECTING SUBMERGED ANTENNA CONDITION**

(71) Applicant: Rosemount Tank Radar AB, 435 23 Mölnlycke (SE)
(72) Inventor: ABRAHAMSSON, Pär, 586 63 Linköping (SE); DELIN, Håkan, 585 93 Linköping (SE); LARSSON, Lars-Ove, 582 72 Linköping (SE)
(74) Representative: Kransell & Wennborg KB

(57) **Abstract**

A radar level gauge system comprising a microwave antenna configured to radiate an electromagnetic transmit signal towards a surface of an aqueous substance, and to receive a reflection signal resulting from reflection of the transmit signal; a transceiver coupled to the microwave antenna, and configured to: generate the transmit signal; provide the transmit signal to the microwave antenna; and receive the reflection signal; and processing circuitry configured to: form an echo representation indicative of received energy as a function of distance; determine, based on the echo representation, that the surface of the aqueous substance cannot be identified within a preconfigured maximum measurement distance from the microwave antenna; determine, based on the echo representation, that received energy within a maximum range for the radar level gauge system is lower than a predefined threshold energy; and determine that the microwave antenna is submerged in the aqueous substance.

## Description

### Technical Field of the Invention

The present invention relates to a radar level gauge system, for use in a level gauging installation to measure a distance to a surface of an aqueous substance, and to a method of measuring a distance to a surface of an aqueous substance.

### Technical Background

Radar level gauge systems are widely used in various installations for determining the distance to the surface of a substance. Different substances provide different challenges. A substance with a high relative dielectric constant, such as an aqueous substance, typically provides a relatively strong surface echo, making it relatively easy to identify the surface echo.

If, however, such an aqueous substance overflows, such that the antenna of the radar level gauge system is submerged, the echo representation formed by the radar level gauge system could easily be interpreted to indicate an empty condition. This could particularly be the case if the radar level gauge system has suffered a temporary lack of power and is restarted while the antenna is submerged.

This could have undesirable consequences. Considering, for example, a wastewater pumping station, an erroneous determination of an empty condition could result in the pumps being turned off, when the wastewater pumping station has in fact been flooded.

It would be desirable to provide for improved radar level gauging of an aqueous substance, in particular with improved capability of detecting that the microwave antenna has been submerged in the aqueous substance.

### Summary

In view of the above, a general object of the present invention is to provide for improved radar level gauging of an aqueous substance, in particular with improved capability of detecting that the microwave antenna has been submerged in the aqueous substance.

According to an aspect of the present invention, it is therefore provided a radar level gauge system, for use in a level gauging installation to measure a distance to a surface of an aqueous substance, the radar level gauge system comprising: a microwave antenna configured to radiate an electromagnetic transmit signal towards the surface of the aqueous substance, and to receive a reflection signal resulting from reflection of the transmit signal; a transceiver coupled to the microwave antenna, the transceiver being configured to: generate the transmit signal; provide the transmit signal to the microwave antenna; and receive the reflection signal; and processing circuitry configured to: form, based on the reflection signal and a timing relation between the transmit signal and the reflection signal, an echo representation indicative of received energy as a function of distance; determine, based on the echo representation, that the surface of the aqueous substance cannot be identified within a preconfigured maximum measurement distance for the level gauging installation; determine, based on the echo representation, that received energy within a maximum range for the radar level gauge system is lower than a predefined threshold energy; and determine that the microwave antenna is submerged in the aqueous substance.

It should be noted that the maximum range of the radar level gauge system is longer than the preconfigured maximum measurement distance in any level gauging installation where the radar level gauge system is used. The maximum range for the radar level gauge system may depend on the specifications of the radar level gauge system, such as signal-to-noise ratio, timing accuracy, which measurement principle is implemented, etc.

The preconfigured maximum measurement distance for the level gauging installation, or another parameter indicative of the preconfigured maximum measurement distance for the level gauging installation, may be provided to the radar level gauge system as a configuration parameter upon installation/initial configuration, when the level gauging installation is formed. The configuration parameter may be stored in non-volatile memory comprised in the radar level gauge system, and in normal operation only surface echo candidates within the maximum distance for the particular level guiding installation may be considered. This may provide for improved performance and reduced energy consumption of the radar level gauge system.

The present invention is based on the realization that evaluation of time-of-flights of the reflection signal indicative of a longer distance than the preconfigured maximum measurement distance provides valuable information for enabling a secure determination of when the microwave antenna is immersed in the aqueous substance.

Such time-of-flights indicative of a longer distance than the preconfigured maximum measurement distance from the microwave antenna may, for example, result from the reflection signal having been reflected multiple times at fixed installations and/or walls of the tank, etc. Multiple reflections, resulting in a relatively weak reflection signal having a time-of-flight indicative of a longer distance than the maximum measurement distance may occur when there is an empty condition. When the microwave antenna is submerged in the aqueous substance, however, no such reflections will take place because the transmit signal can only propagate through the aqueous substance a very short distance.

Thus, in particular, evaluation of the echo representation within the maximum range of the radar level gauge system, including for time-of-flights of the reflection signal indicative of distances longer than the preconfigured maximum measurement distance facilitates discrimination between the case where the microwave antenna is submerged in the aqueous substance and an empty condition, or general low level condition. For instance, the empty/low level condition may be set at a level where an installed pump risks running dry. This, in turn, provides for improved operation of, for instance, water and wastewater installations where there is a risk of temporary flooding.

In embodiments of the radar level gauge system according to the invention, the processing circuitry may be configured to determine that the surface of the aqueous substance cannot be identified within the maximum measurement distance, by determining that the echo representation fails to fulfill a predefined surface echo detection criterion within the maximum measurement distance from the microwave antenna. Advantageously, the surface echo detection criterion may include detection of a peak in the echo representation, within the maximum measurement distance from the microwave antenna, having an amplitude being higher than a predefined first echo detection threshold amplitude. When a peak in the echo representation, having an amplitude higher than the first echo detection threshold amplitude, is detected within the range of time-of-flights of the reflection signal indicating distances within the maximum measurement distance from the microwave antenna, for the level gauging installation, the distance to the surface of the aqueous substance can be determined based on the time-of-flight of that peak. When no such peak is detected within the range of time-of-flights of the reflection signal indicating distances within the maximum measurement distance from the microwave antenna, it can be concluded that the surface of the aqueous substance cannot be identified within the preconfigured maximum measurement distance for the level gauging installation.

In embodiments of the radar level gauge system according to the present invention, furthermore, the processing circuitry may be configured to determine that received energy within the maximum range for the radar level gauge system is lower than the predefined threshold energy, based on a failure to detect a peak in the echo representation within the maximum range of the radar level gauge system, having an amplitude being higher than a predefined second echo detection threshold amplitude, lower than the first echo detection threshold amplitude.

The processing circuitry of the radar level gauge system may be configured to, when it has been concluded that the surface of the aqueous substance cannot be identified within the maximum measurement distance from the microwave antenna, additionally evaluate the echo representation within at least a portion of the echo representation indicative of distances longer than the maximum measurement distance from the microwave antenna. For at least this portion of the echo representation, the processing circuitry may be configured to evaluate the amplitude of the echo representation and/or integrate the echo representation for an evaluation of a total amount of microwave energy received with time-of-flights indicative of a distance longer than the preconfigured maximum measurement distance for the level gauging installation. Alternatively, or in combination, an evaluation of the amplitude and/or accumulated energy for the echo representation across the entire maximum range for the radar level gauge system may be performed, and a conclusion concerning whether or not the microwave antenna is submerged in the aqueous substance can be drawn from such an evaluation.

In various embodiments, the radar level gauge system may be of the so-called FMCW (frequency modulated continuous wave) type. In these embodiments, the transceiver may be configured to: generate the transmit signal in the form of a measurement sweep; and form an intermediate frequency signal indicative of a frequency difference between the reflection signal and the transmit signal, as a function of time; the radar level gauge system may comprise a sampler coupled to the transceiver and configured to sample the intermediate frequency signal with a predefined number of samples during the measurement sweep; and the processing circuitry may be coupled to the sampler, and configured to form the echo representation based on the samples. In these embodiments, the maximum range of the radar level gauge system may be related to the bandwidth and the predefined number of samples, as is, *per se*, well-known to one or ordinary skill in the art.

The radar level gauge system according to embodiments of the present invention may, furthermore, be included in a level gauging installation, further comprising a tank having a tank bottom, and a tank wall, wherein the radar level gauge system is arranged in such a way that the microwave antenna of the radar level gauge system is vertically spaced apart from the tank bottom.

According to a second aspect of the present invention, there is provided a method of measuring a distance to a surface of an aqueous substance using a radar level gauge system, comprising: generating, by a transceiver of the radar level gauge system, an electromagnetic transmit signal; providing the transmit signal to a microwave antenna of the radar level gauge system; radiating, by the microwave antenna, the transmit signal substantially vertically towards a surface of an aqueous substance; receiving, by the transceiver via the microwave antenna, a reflection signal resulting from reflection of the transmit signal; forming, by processing circuitry of the radar level gauge system coupled to the transceiver, an echo representation indicative of received energy as a function of distance, based on the reflection signal and a timing relation between the transmit signal and the reflection signal; determining, by the processing circuitry based on the echo representation, that the surface of the aqueous substance cannot be identified within a preconfigured maximum measurement distance from the microwave antenna; determining, by the processing circuitry based on the echo representation, that received energy for distances longer than the preconfigured maximum measurement distance is lower than a predefined threshold energy; and determining, by the processing circuitry, that the microwave antenna is submerged in the aqueous substance.

In summary, aspects of the present invention thus relate to a radar level gauge system comprising a microwave antenna configured to radiate an electromagnetic transmit signal towards a surface of an aqueous substance, and to receive a reflection signal resulting from reflection of the transmit signal; a transceiver coupled to the microwave antenna, and configured to: generate the transmit signal; provide the transmit signal to the microwave antenna; and receive the reflection signal; and processing circuitry configured to: form an echo representation indicative of received energy as a function of distance; determine, based on the echo representation, that the surface of the aqueous substance cannot be identified within a preconfigured maximum measurement distance from the microwave antenna; determine, based on the echo representation, that received energy within a maximum range for the radar level gauge system is lower than a predefined threshold energy; and determine that the microwave antenna is submerged in the aqueous substance.

### Brief Description of the Drawings

These and other aspects of the present invention will now be described in more detail, with reference to the appended drawings, wherein:
Fig 1 schematically shows an example level gauging installation comprising the radar level gauge system according to embodiments of the present invention;
Fig 2 is a schematic illustration of a radar level gauge system according to embodiments of the present invention;
Fig 3 is a flow-chart illustrating a method according to an example embodiment of the present invention; and
Fig 4A-C are diagrams showing exemplary echo representations for three different states of the level gauging installation.

### Detailed Description of Example Embodiments of the Invention

In the following detailed description, example embodiments of the invention are mainly described with reference to a level gauging installation where the aqueous substance is contained in a tank, and the maximum measurement distance for the level gauging installation is set to correspond to the distance between the microwave antenna and the bottom of the tank. It should be noted that this in no way be seen as limiting the scope of the invention, as defined by the independent claims. For instance, the aqueous substance need not be contained in a tank, but may be supported by another natural or man-made structure, including but not limited to a canal, a river bed, a reservoir, etc. Furthermore, it should be noted that the preconfigured maximum measurement distance for a particular level gauging installation may or may not be related to the distance between the microwave antenna and the structure supporting the aqueous substance. For example, a user configuring a particular level gauging installation may input a "zero level" defining a minimum reference level for the level gauging installation, which may be at a higher or lower level than a bottom of the structure supporting the aqueous substance.

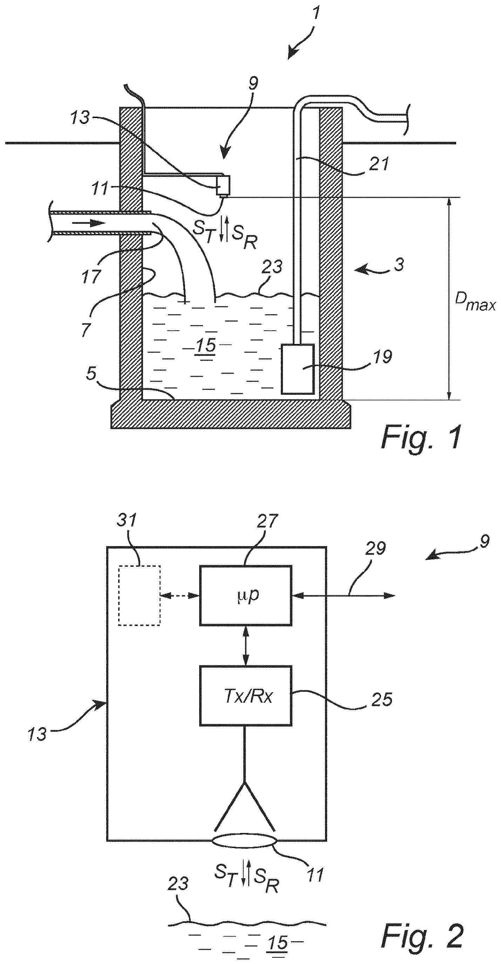

Fig 1 schematically shows an example level gauging installation 1 comprising a tank 3 having a bottom 5 and a wall 7, and a radar level gauge system 9 according to embodiments of the present invention. The radar level gauge system 9 comprises a microwave antenna 11 and a measurement unit 13, which will be described in greater detail further below. The radar level gauge system 9 is arranged in such a way that the microwave antenna 11 is vertically spaced apart from the tank bottom 5 by a preconfigured maximum measurement distance Dₘₐₓ for the level gauging installation.

In the exemplary illustration of fig 1, the level gauging installation 1 is a pumping station involved in carrying wastewater to a wastewater treatment plant, so that the aqueous substance 15 being gauged by the level gauging system 9 is wastewater. The level gauging installation 1 thus comprises a wastewater inlet 17, and a pump 19 for pumping the wastewater through an outlet pipe 21 to a higher level.

The radar level gauge system 9 in fig 1 operates by radiating an electromagnetic transmit signal S_{T} towards the surface 23 of the aqueous substance 15 in the tank, receiving a reflection signal S_{R} resulting from reflection at the surface 23, and determining the distance between the microwave antenna 11 of the radar level gauge system 9 and the surface 23 based on a timing relation between the reflection signal S_{R} and the transmit signal S_{T}. If desired, the level of substance 15 in the tank 3 can, of course, be deduced from the determined distance and the distance Dₘₐₓ between the microwave antenna 11 and a preconfigured zero level for the level gauging installation 1, which is here indicated as being the bottom 5 of the tank 3.

In an application such as the level gauging installation 1 in fig 1, the determined distance can, for instance, be used for monitoring the status of the pumping station, and for controlling operation of the pump 19. To protect the pump 19, it may, for example, be controlled to stop if it is determined that the tank 3 is empty. In connection with, for example, flooding events, the tank 3 may be overfilled, such that the microwave antenna 11 becomes submerged in the aqueous substance 15. In an overfill situation, it would be highly undesirable to control the pump 19 to stop and/or report to a supervising system that the tank 3 is empty. Embodiments of the radar level gauge system 9 according to the present invention enable improved capabilities of distinguishing between an overfill situation and a situation with an empty tank 3.

Fig 2 is a schematic illustration of the radar level gauge system 9 according to an example of the present invention. Referring to fig 2, and in addition to what was briefly mentioned above with reference to fig 1, the radar level gauge system 9 comprises a transceiver 25, processing circuitry 27, a communication interface 29, and optionally non-volatile memory 31 for storing configuration parameters for the radar level gauge system 9.

The microwave antenna 11, which may for example be a dielectric lens antenna, is configured to radiate an electromagnetic transmit signal S_{T} towards the surface 23 of the aqueous substance 15, and to receive a reflection signal S_{R} resulting from reflection of the transmit signal S_{T}. The transceiver 25 is coupled to the microwave antenna 11 and configured to generate the transmit signal S_{T}, provide the transmit signal S_{T} to the microwave antenna 11, and receive the reflection signal S_{R}. The processing circuitry 27 is configured to form, based on the reflection signal S_{R} and a timing relation between the transmit signal S_{T} and the reflection signal S_{R}, an echo representation indicative of received energy as a function of distance. The processing circuitry 27 is configured to determine the distance to the surface 23 of the aqueous substance 15 using the echo representation, and to provide a indication of the distance externally from the radar level gauge system 9, as is schematically indicated by the communication interface 29.

When the processing circuitry 27 determines, based on the echo representation, that the surface 23 of the aqueous substance 15 cannot be identified, the processing circuitry 27 may configured to evaluate a received energy carried by the reflection signal S_{R} within a maximum range for the radar level gauge system 9. When this received energy is lower than a predefined threshold energy, the processing circuitry 27 may be configured to determine that the microwave antenna 11 is submerged in the aqueous substance 15. An indication of the microwave antenna 11 being submerged may be provided externally of the radar level gauge system 9, through the communication interface 29. The received energy may be evaluated for a portion of the maximum range and/or for the entire maximum range.

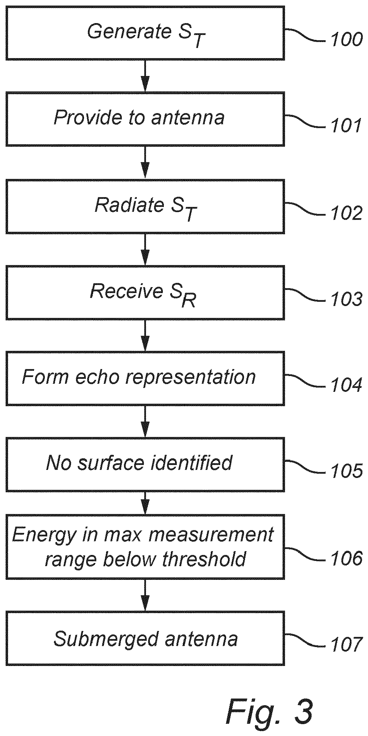

Fig 3 is a flow-chart illustrating a method according to an example embodiment of the present invention, which will be described with further reference to other figures as indicated or implied below.

An electromagnetic transmit signal S_{T} is generated 100 by a transceiver 25 of a radar level gauge system 9. The transmit signal S_{T} is provided 101, by the transceiver 25, to a microwave antenna 11 of the radar level gauge system 9. The transmit signal S_{T} is radiated 102 by the microwave antenna 11 towards a surface 23 of the aqueous substance 15 in a tank 3. A reflection signal S_{R} is received 103 by the transceiver 25 via the microwave antenna 11. Based on the reflection signal S_{R} and a timing relation between the transmit signal S_{T}, an echo representation is then formed 104 by the processing circuitry 27. The echo representation indicates received energy as a function of distance traveled by the reflection signal, and may be formed using techniques known to those skilled in the art of radar level gauging.

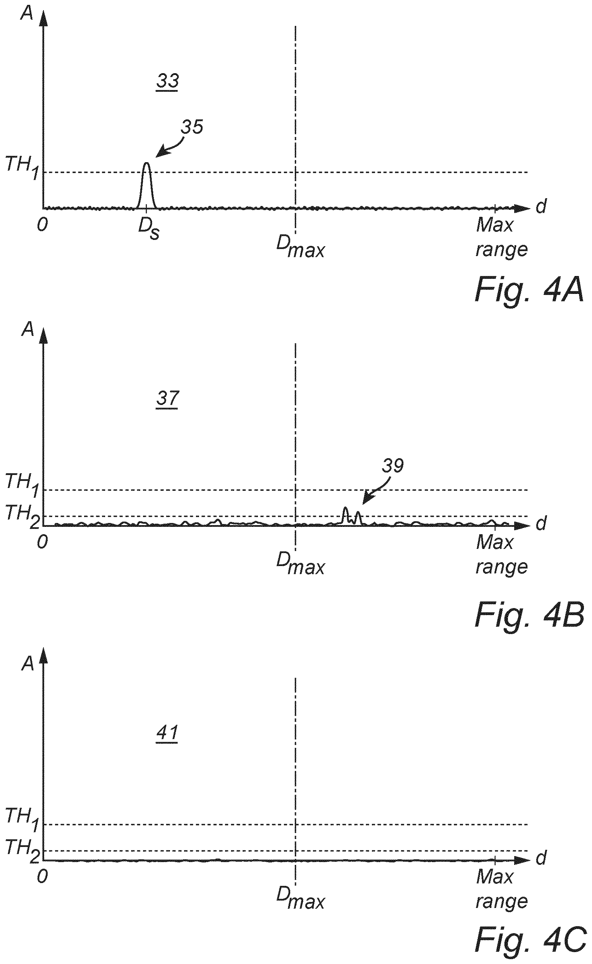

When the echo representation, sometimes referred to as echo curve, has been formed, it is evaluated by the processing circuitry 27 of the radar level gauge system 9. Evaluation of three different echo representations, resulting from different situations in the level gauging installation 1 will now be described with additional reference to figs 4A-C.

Fig 4A illustrates a first echo representation 33 showing an amplitude A of microwave energy received by the transceiver 25 as a function of distance d from the microwave antenna 11. The preconfigured maximum measurement distance, is indicated by Dₘₐₓ in the echo representation 33. As was mentioned further above, this maximum distance Dₘₐₓ may typically be provided to the radar level gauge system 9 in connection with initial configuration thereof in a level gauging installation 1. As was also mentioned further above, the maximum range - indicated by Max range in fig 4A - of the radar level gauge system 9 is longer than the maximum distance Dₘₐₓ for the level gauging installation 1. When evaluating the echo representation 33 in fig 4A, the processing circuitry 27 may, as is schematically indicated in fig 4A, compare the echo representation 33 within the maximum distance Dₘₐₓ with a predefined first threshold amplitude TH₁, and conclude that a surface echo 35 is identified. The processing circuitry 27 may determine the distance Dₛ to the surface 23 of the aqueous substance 15 using the surface echo 35, and externally provide an indication thereof.

Fig 4B illustrates a second echo representation 37. When evaluating the echo representation 37 in fig 4B with the aim of identifying and locating the surface 23 as described above for the echo representation 33 in fig 4A, the processing circuitry 27 may determine 105 that the surface 23 of the aqueous substance 15 cannot be identified within the preconfigure maximum measurement distance Dₘₐₓ from the microwave antenna 11. This determination can be performed by comparing the echo representation 37 within the maximum distance Dₘₐₓ with the first threshold amplitude TH₁, and concluding that the amplitude of the echo representation 37 is lower than the first threshold amplitude TH₁ everywhere within the maximum distance Dₘₐₓ.

When having determined that the surface 23 of the aqueous substance 15 cannot be identified within the maximum distance Dₘₐₓ for the level gauging installation 1, the processing circuitry 27 proceeds to additionally evaluate the echo representation 37 for distances greater than the maximum distance. For example, the processing circuitry 27 may compare the echo representation 37 with a predefined second echo detection threshold TH₂. In the measurement situation schematically shown by fig 4B, an echo peak 39 with an amplitude higher than the second echo detection threshold TH₂ is identified by the processing circuitry 27, indicating a distance traveled by the reflection signal being greater than the maximum distance Dₘₐₓ for the level gauging installation 1.

From this finding, the processing circuitry 27 may conclude that microwave energy can travel a long distance inside the tank 3, and that the tank 3 is therefore most likely empty. The processing circuitry 27 may proceed to provide an indication of this finding externally to the radar level gauge system 9, via the communication interface 29.

Fig 4C illustrates a third echo representation 41. As for the echo representation 37 in fig 4B, the processing circuitry 27 may determine 105 that the surface 23 of the aqueous substance 15 cannot be identified within the preconfigured maximum measurement distance Dₘₐₓ from the microwave antenna 11.

When having determined that the surface 23 of the aqueous substance 15 cannot be identified within the maximum distance Dₘₐₓ for the level gauging installation 1, the processing circuitry 27 proceeds to additionally evaluate the echo representation 41 for distances greater than the maximum distance. For example, the processing circuitry 27 may compare the echo representation 37 with a predefined second echo detection threshold TH₂. In the measurement situation schematically shown by fig 4C, the echo representation 41, for all distances in the echo representation 41 longer than the maximum measurement distance Dₘₐₓ from the microwave antenna 11fails reach the second echo detection threshold amplitude TH₂. For example based on this finding, the processing circuitry 27 determines 106 that the received energy for distances longer than the maximum measurement distance Dₘₐₓ from the microwave antenna 11 is lower than a predefined threshold energy, and determines 107 that the microwave antenna 11 is most likely submerged in the aqueous substance.

The person skilled in the art realizes that the present invention by no means is limited to the preferred embodiments described above. On the contrary, many modifications and variations are possible within the scope of the appended claims.

## Claims

1. A radar level gauge system, for use in a level gauging installation to measure a distance to a surface of an aqueous substance, the radar level gauge system comprising:
a microwave antenna configured to radiate an electromagnetic transmit signal towards the surface of the aqueous substance, and to receive a reflection signal resulting from reflection of the transmit signal;
a transceiver coupled to the microwave antenna, the transceiver being configured to:
generate the transmit signal;
provide the transmit signal to the microwave antenna; and
receive the reflection signal; and
processing circuitry configured to:
form, based on the reflection signal and a timing relation between the transmit signal and the reflection signal, an echo representation indicative of received energy as a function of distance;
determine, based on the echo representation, that the surface of the aqueous substance cannot be identified within a preconfigured maximum measurement distance for the level gauging installation;
determine, based on the echo representation, that received energy within a maximum range for the radar level gauge system is lower than a predefined threshold energy; and
determine that the microwave antenna is submerged in the aqueous substance.

2. The radar level gauge system according to claim 1, the processing circuitry being configured to provide an indication of the microwave antenna being submerged.

3. The radar level gauge system according to claim 1 or 2, the processing circuitry being configured to receive a configuration parameter indicative of the maximum measurement distance for the level gauging installation.

4. The radar level gauge system according to claim 3, the processing circuitry being configured to store the configuration parameter in non-volatile memory comprised in the radar level gauge system.

5. The radar level gauge system according to any one of the preceding claims, the processing circuitry being configured to determine that the surface of the aqueous substance cannot be identified within the maximum measurement distance, by determining that the echo representation fails to fulfill a predefined surface echo detection criterion within the maximum measurement distance.

6. The radar level gauge system according to claim 5, the surface echo detection criterion including detection of a peak in the echo representation, within the maximum measurement distance, having an amplitude being higher than a predefined first echo detection threshold amplitude.

7. The radar level gauge system according to claim 6, the processing circuitry being configured to determine that received energy within the maximum range for the radar level gauge system is lower than the predefined threshold energy, based on a failure to detect a peak in the echo representation within the maximum range of the radar level gauge system, having an amplitude being higher than a predefined second echo detection threshold amplitude, lower than the first echo detection threshold amplitude.

8. The radar level gauge system according to any one of the preceding claims:
the transceiver being configured to:
generate the transmit signal in the form of a measurement sweep; and
form an intermediate frequency signal indicative of a frequency difference between the reflection signal and the transmit signal, as a function of time;
the radar level gauge system comprising a sampler coupled to the transceiver and configured to sample the intermediate frequency signal with a predefined number of samples during the measurement sweep; and
the processing circuitry being coupled to the sampler, and configured to form the echo representation based on the samples.

9. A level gauging installation, comprising the radar level gauge system according to any one of the preceding claims arranged in such a way that the microwave antenna of the radar level gauge system is vertically spaced apart from a surface of an aqueous substance.

10. A method of measuring a distance to a surface of an aqueous substance using a radar level gauge system, comprising:
generating, by a transceiver of the radar level gauge system, an electromagnetic transmit signal;
providing the transmit signal to a microwave antenna of the radar level gauge system;
radiating, by the microwave antenna, the transmit signal substantially vertically towards a surface of an aqueous substance;
receiving, by the transceiver via the microwave antenna, a reflection signal resulting from reflection of the transmit signal;
forming, by processing circuitry of the radar level gauge system coupled to the transceiver, an echo representation indicative of received energy as a function of distance, based on the reflection signal and a timing relation between the transmit signal and the reflection signal;
determining, by the processing circuitry based on the echo representation, that the surface of the aqueous substance cannot be identified within a preconfigured maximum measurement distance from the microwave antenna;
determining, by the processing circuitry based on the echo representation, that received energy for distances longer than the maximum measurement distance from microwave antenna is lower than a predefined threshold energy; and
determining, by the processing circuitry, that the microwave antenna is submerged in the aqueous substance.

11. The method according to claim 10, the method comprising:
providing an indication of the microwave antenna being submerged.

12. The method according to claim 10 or 11, the method comprising determining, by the processing circuitry based on the echo representation, that received energy within a maximum range for the radar level gauge system is lower than a predefined threshold energy.

13. The method according to any one of claims 10 to 12, comprising:
receiving, by the processing circuitry, a configuration parameter indicative of the maximum measurement distance from the microwave antenna.

14. The method according to any one of claims 10 to 13, wherein determining that the surface of the aqueous substance cannot be identified within the maximum measurement distance from the microwave antenna:
comparing the echo representation for all distances within the maximum measurement distance from the microwave antenna with a predefined first echo detection threshold amplitude; and
determining that the echo representation for all distances within the maximum measurement distance from the microwave antenna fails reach the first echo detection threshold amplitude.

15. The method according to claim 14, wherein determining that received energy for distances longer than the maximum measurement from the microwave antenna is lower than a predefined threshold energy comprises:
comparing the echo representation for all distances in the echo representation longer than the maximum measurement distance from the microwave antenna with a predefined second echo detection threshold amplitude, lower than the first echo detection threshold amplitude; and
determining that the echo representation for all distances in the echo representation longer than the maximum measurement distance fails reach the second echo detection threshold amplitude.
